# EUROPEAN PATENT SPECIFICATION

(11) **EP 4 304 100 B1**
(45) Date of publication and mention of the grant of the patent: **07.10.2026**
(21) Application number: 22783808.3
(22) Date of filing: 25.02.2022
(51) Int. Cl.: H04B 3/02, H02J 7/00, H04B 3/54, H02J 7/42, H02J 7/44

(54) **CHARGING CABLE, POWER SUPPLY APPARATUS, TERMINAL DEVICE, AND COMMUNICATION SYSTEM**
LADEKABEL, STROMVERSORGUNGSVORRICHTUNG, ENDGERÄTEVORRICHTUNG UND KOMMUNIKATIONSSYSTEM
CÂBLE DE CHARGE, APPAREIL D'ALIMENTATION ÉLECTRIQUE, DISPOSITIF DE TERMINAL ET SYSTÈME DE COMMUNICATION

(30) Priority: 08.04.2021 CN 202110376689
(43) Date of publication of application: 10.01.2024
(73) Proprietor: GUANGDONG OPPO MOBILE TELECOMMUNICATIONS CORP., LTD., Dongguan, Guangdong 523860 (CN)
(72) Inventor: GUO, Hongguang, Dongguan, Guangdong 523860 (CN); LIN, Shangbo, Dongguan, Guangdong 523860 (CN); ZHANG, Jialiang, Dongguan, Guangdong 523860 (CN)
(74) Representative: Penza, Giancarlo
(86) International application number: PCT/CN2022/077913
(87) International publication number: WO 2022/213738

(56) References cited:
- WO-A1-2017/128707
- WO-A1-2017/128707
- CN-A- 103 151 658
- CN-A- 103 151 658
- CN-A- 105 048 018
- CN-A- 105 914 547
- CN-A- 111 509 816
- CN-A- 112 269 086
- CN-A- 112 269 086
- US-A1- 2020 189 416
- US-A1- 2023 085 923

## Description

### TECHNICAL FIELD

The present disclosure relates to the field of charging technologies, and in particular to a charging cable, a communication system and a communication method.

### BACKGROUND

With the rapid development of electronic technology, the charging power of a terminal product becomes higher and higher, and an original state in which a power supply apparatus (such as a charger, and a mobile power supply) and a terminal device do not communicate with each other has also gradually transitioned into a state in which the two communicate with each other, so as to improve the security of fast charging. A charging system involves three parties, i.e., a power supply apparatus, a terminal device and a charging cable. A normal charging state of charging at a high power can be entered quickly only if the three parties can communicate with each other.

At present, in order to realize communication among the power supply apparatus, the terminal device and the charging cable, an additional pin needs to be added to the power supply apparatus or the terminal device, or a signal line needs to be added in the charging cable, so that communication among the power supply apparatus, the terminal device and the charging cable can be realized, which increases the cost.

CN 112269086A discloses a charging cable identification method. In the method, when a charging cable identification device is in a monitoring mode, if a first target communication port receives a charging cable identification request, a second target communication port is switched from a data receiving state to a data sending state, and charging cable identification information is sent through the second target communication port. The first target communication port is one of a first communication port and a second communication port, and the second target communication port is another one of the first communication port and the second communication port. The first communication port and the second communication port are both in a data receiving state in the monitoring mode.

US 2020/189416 A1 discloses a charging cable. The charging cable includes: a plurality of pins, and a storage configured to store software. The software controls communication with a communication device connected through at least one of the plurality of pins, controls communication with a charging object connected through the plurality of pins, controls charging of the charging object and monitors the charging. The charging cable further includes a controller configured to: when a first voltage is applied to the at least one pin of the plurality of pins, control to output a pulse width modulation (PWM) signal having a predetermined first duty ratio corresponding to a communication enabled state with the communication device through the at least one pin; and when a second voltage is applied to the at least one pin, change to an update mode and control to output the PWM signal having a predetermined second duty ratio corresponding to the change to the update mode through the at least one pin.

### SUMMARY

Embodiments of the present disclosure provide a charging cable, a communication system, and a communication method, which meet the communication requirements among the power supply apparatus, the terminal device and the charging cable, and reduce the cost. The invention is set out in the appended set of claims.

The details of one or more embodiments of the present disclosure are set forth in the following drawings and descriptions. Other features and advantages of the present application will be apparent from the description, drawings, and claims.

### BRIEF DESCRIPTION OF THE DRAWINGS

In order to more clearly explain technical solutions of the embodiments of the present disclosure, drawings used in the embodiments will be briefly introduced below. Obviously, the drawings as described below are merely some embodiments of the present disclosure. Based on these drawings, other drawings can be obtained by those skilled in the art without inventive effort.
FIG. 1 is a diagram illustrating an application scenario of a communication system according to an embodiment.
FIG. 2 is a structural block diagram of a communication system according to an embodiment.
FIG. 3 is a structural block diagram of a communication system according to another embodiment.
FIG. 4 is a structural block diagram of a communication system according to another embodiment.
FIG. 5A is a schematic diagram illustrating working states of individual pins of a power supply apparatus, a terminal device, and a charging cable, when the power supply apparatus and the terminal device communicate with each other, according to an embodiment.
FIG. 5B is a schematic diagram illustrating working states of individual pins of the power supply apparatus, the terminal device, and the charging cable, when the terminal device and the charging cable communicate with each other, according to an embodiment.
FIG. 5C is a schematic diagram illustrating working states of individual pins of the power supply apparatus, the terminal device, and the charging cable, when the power supply apparatus and the charging cable communicate with each other, according to an embodiment.
FIG. 6A is a schematic circuit diagram illustrating outputting at a push-pull output mode according to an embodiment.
FIG. 6B is a schematic circuit diagram in which a pin in the push-pull output mode is connected in series with a resistor according to an embodiment.
FIG. 7 is a schematic circuit diagram illustrating outputting at an open-drain output mode according to an embodiment.
FIG. 8 is a schematic circuit diagram in which a pin is in a non-output state according to an embodiment.
FIG. 9 is a flowchart of a communication method according to an embodiment.

### DETAILED DESCRIPTION OF PREFERRED EMBODIMENTS

The technical solutions in the embodiments of the present disclosure will be clearly and comprehensively described below with reference to the drawings in the embodiments of the present disclosure. Apparently, the described embodiments are only some of the embodiments of the present disclosure, but not all of the embodiments. All other embodiments, obtained by those skilled in the art based on the embodiments in the present disclosure without inventive work, shall fall within the protection scope of the present disclosure.

It will be noted that the terms "include" and "have" and any variations thereof in the embodiments of the present disclosure and the drawings are intended to cover the exclusive inclusion. For example, a process, method, system, product, or device containing a series of operations or units are not limited to the operations or units already listed, but may optionally also include operations or units not listed, or optionally further include operations or units inherent to such process, method, product, or device.

It will be understood that the terms "first", "second", and the like used in the present disclosure may be used herein to describe various elements, but these elements are not limited by these terms. These terms are only used to distinguish the first element from another element. For example, without departing from the scope of the present disclosure, a first data transmission pin may be referred to as a second data transmission pin, and similarly, the second data transmission pin may be referred to as the first data transmission pin. The first data transmission pin and the second data transmission pin are both data transmission pins, but they are not the same data transmission pin.

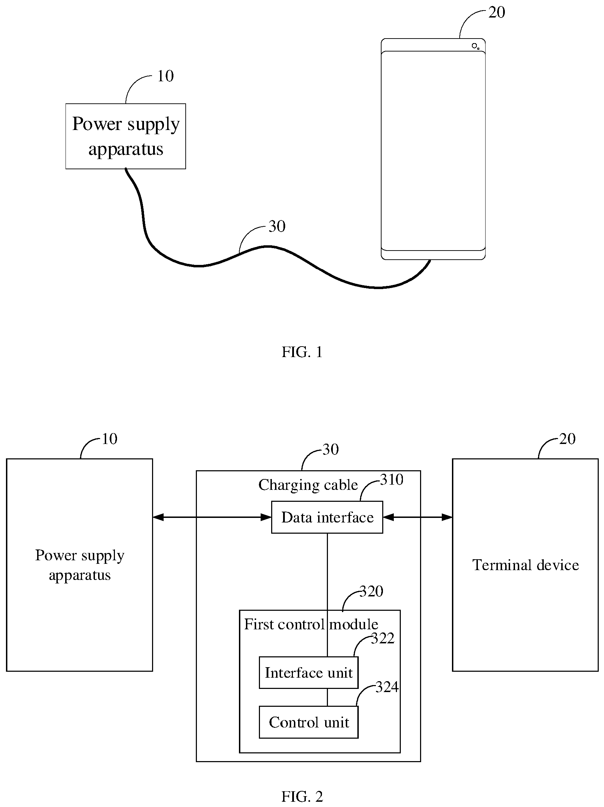

FIG. 1 is a diagram illustrating an application scenario of a communication system according to an embodiment. As illustrated in FIG. 1, a power supply apparatus 10 is connected with a terminal device 20 through a charging cable 30, and outputs a charging voltage and a charging current that meet the charging requirement to the terminal device 20, so as to charge the terminal device 20. In some implementations, the power supply apparatus 10 may include, but is not limited to, an adapter, a mobile power supply, and the like, and the terminal device 20 may include, but is not limited to, a mobile phone, a tablet computer, a wearable device, a notebook computer, a personal computer (PC), and the like. The embodiments of the present disclosure do not specifically limit the form of the power supply apparatus 10 and the terminal device 20.

When the power supply apparatus 10 is connected with the terminal device 20 through the charging cable 30, the power supply apparatus 10, the charging cable 30, and the terminal device 20 all need to determine whether the requirement for charging at high power is met or not. When all of the three meet the requirement for charging at high power, fast charging can be realized by utilizing a large charging current. Only when the power supply apparatus 10, the terminal device 20, and the charging cable 30 can communicate with each other, they could identify each other.

In the related art, communication among the power supply apparatus 10, the terminal device 20, and the charging cable 30 is mainly performed in the following ways.
(1) Communication among the power supply apparatus 10, the terminal device 20 and the charging cable 30 is performed through a single wire (for example, PD2.0/PD3.0), and an additional signal line (such as CC1 line and Vconn line) needs to be added in the charging cable 30.
(2) The power supply apparatus 10 and the terminal device 20 communicate with each other through D+ and/or D- data lines in the charging cable 30 without communicating with the charging cable 30. The power supply apparatus 10 and the terminal device 20 tacitly approve the current transmission capability of the charging cable 30, or evaluate the current transmission capability of the charging cable 30 by other adaptive manners to determine whether the charging cable 30 meets the requirement for charging at high power.
(3) The power supply apparatus 10 and the terminal device 20 communicate with each other through the D+ and/or D- data lines in the charging cable 30, and an additional pin (such as ID pin) is added in each of the power supply apparatus 10 and the terminal device 20 to communicate with and identify the charging cable 30.

In the above several communication ways, if communication among the power supply apparatus 10, the terminal device 20, and the charging cable 30 needs to be implemented, an additional pin needs to be added in each of the power supply apparatus 10 and the terminal device 20, or a signal line needs to be added in the charging cable 30, which increases the cost of the charging system.

In the charging cable, the communication system and the communication method provided in the embodiments of the present disclosure, the power supply apparatus 10 is connected with the terminal device 20 through the charging cable 30, and the charging cable 30 flexibly switches the working state of an interface unit based on communication information transmitted from the power supply apparatus 10 or the terminal device 20. This enables the requirements for communication between the power supply apparatus 10 and the terminal device 20, communication between the power supply apparatus 10 and the charging cable 30, and communication between the terminal device 20 and the charging cable 30 to be met. This does not need to add an additional pin in the power supply apparatus 10 or the terminal device 20, and the communication is performed using the original data transmission line in the charging cable 30 without adding a new signal line. Therefore, the cost is reduced.

As illustrated in FIG. 2, a charging cable 30 is provided in an embodiment. The charging cable 30 may include a data interface 310 and a first control module 320. The power supply apparatus 10 and the terminal device 20 is connected through the charging cable 30.

The data interface 310 is configured to be connected with the power supply apparatus 10 and connected with the terminal device 20.

The power supply apparatus 10 and the terminal device 20 communicate with each other through the data interface 310. In some embodiments, the data interface 310 may include a first type of data pin and a second type of data pin. For example, the first type of data pin may be a D+ pin, and the second type of data pin may be a D- pin; alternatively, the first type of data pin may be a D- pin, and the second type of data pin may be D+ pin, but it is not limited thereto.

Further, the data interface 310 may include a first interface and a second interface, where the first interface may be connected with the power supply apparatus 10, and the second interface may be connected with the terminal device 20. The first interface may include at least one first type of data pin and at least one second type of data pin, and the second interface may also include at least one first type of data pin and at least one second type of data pin. A first data transmission line (for example, a D-line) may be provided between two first type of data pins of the first interface and the second interface, and a second data transmission line (for example, a D + line) may be provided between two second type of data pins of the first interface and the second interface. The power supply apparatus 10 and the terminal device 20 may transmit data through simultaneously the first data transmission line and the second data transmission line, or transmit data through one of the data transmission lines.

The charging cable 30 may further include a charging line (not shown), and the power supply apparatus 10 may provide a charging voltage and a charging current to the terminal device 20 through the charging line 10, to charge the terminal device 20.

The first control module 320 includes an interface unit 322 and a control unit 324.

The first control module 320 may include, but is not limited to, an E-mark (Electronically Marked) chip, a microcontroller, and the like. The first control module 320 may be mounted on a data transmission line in the charging cable 30, and communicate with the power supply apparatus 10 and the terminal device 20 through the data interface 310.

In some implementations, the first control module 320 may store related information of the charging cable 30, where the related information may be used to describe a power transmission capability, a data transmission capability, an ID (identity document) information of the charging cable 30, and the like. The power transmission capability may be used to represent a capability of the charging cable 30 in transporting a power signal, for example, a maximum charging current that may be transported by the charging cable 30. The data transmission capability may be used to represent a capability of the charging cable 30 in data transmission, for example, a maximum byte-transmission rate of the charging cable, and the like. The ID information may be used to identify the identity of the charging cable 30.

The interface unit 322 is connected with the data interface 310, and configured to communicate with the power supply apparatus 10 and the terminal device 20 through the data interface 310.

The control unit 324 is configured to, when communication information transmitted from the power supply apparatus 10 or the terminal device 20 is received through the interface unit 322, switch a working state of the interface unit 322 based on the communication information.

The control unit 324 communicates with the power supply apparatus 10 and the terminal device 20 through the interface unit 322. When the control unit 324 receives, through the interface unit 322, the communication information transmitted from the power supply apparatus 10 or the terminal device 20, the control unit 324 parses the communication information according to a communication protocol agreed with the power supply apparatus 10 and the terminal device 20, and switches the working state of the interface unit based on the communication information. As such, the requirements for the communication between the power supply apparatus 10 and the terminal device 20, the communication between the power supply apparatus 10 and the charging cable 30, and the communication between the terminal device 20 and the charging cable 30 are met.

The working state includes a receiving state and an output state. The receiving state refers to a working state in which the interface unit 322 is capable of receiving data transmitted from the power supply apparatus 10 or the terminal device 20. When the interface unit 322 is in the receiving state, the control unit 324 is capable of only receiving, through the interface unit 322, data transmitted from the power supply apparatus or the terminal device, and is incapable of transmitting data to the power supply apparatus or the terminal device through the interface unit 322. The output state refers to a state in which the interface unit 322 is capable of transmitting data to the power supply apparatus 10 or the terminal device 20. When the interface unit 322 is in the output state, the control unit 324 is capable of not only transmitting data to the power supply apparatus 10 or the terminal device 20 through the interface unit 322, but also receiving, through the interface unit 322, the data transmitted from the power supply apparatus 10 or the terminal device 20.

In the embodiments of the present disclosure, when the control unit 324 of the charging cable 30 receives, through the interface unit 322, the communication information transmitted from the power supply apparatus 10 or the terminal device 20, the control unit 324 switches the working state of the interface unit 322 based on the communication information. As such, the working state of the interface unit can be flexibly switched based on the communication information transmitted from the power supply apparatus 10 and the terminal device 20, which enables the requirements for the communication between the power supply apparatus 10 and the terminal device 20, the communication between the power supply apparatus 10 and the charging cable 30, and the communication between the terminal device 20 and the charging cable 30 to be met, without adding an additional pin in the power supply apparatus 10 or the terminal device 20. Moreover, the interface unit 322 performs the communication directly through the data interface 310, and the communication is performed using the original data transmission line in the charging cable 30 without adding a new signal line. Therefore, the cost is reduced.

In some embodiments, the communication information may include a first type of communication information, and the first type of communication information is configured to indicate that communication needs to be performed between the power supply apparatus 10 and the terminal device 20.

The control unit 324 is further configured to, when the first type of communication information transmitted from the power supply apparatus 10 or the terminal device 20 is received through the interface unit 322, switch the interface unit 322 to being in the receiving state based on the first type of communication information.

When data transmission needs to be performed between the power supply apparatus 10 and the terminal device 20, the interface unit 322 is switched to being in the receiving state, in which the control unit 324 is incapable of transmitting data to the power supply apparatus 10 and the terminal device 20 through the interface unit 322. Therefore, no interference is caused to the communication between the power supply apparatus 10 and the terminal device 20. In addition, in the receiving state, the control unit 324 is capable of receiving, through the interface unit 322, the communication information transmitted from the power supply apparatus 10 and the terminal device 20, which is beneficial to switch the working state of the interface unit 322 again based on the requirements of the power supply apparatus 10 and the terminal device 20.

In some embodiments, the communication information may include a second type of communication information, and the second type of communication information may be used to indicate that the power supply apparatus 10 or the terminal device 20 needs to communicate with the charging cable 30.

The control unit 324 is further configured to, when the second type of communication information transmitted from the power supply apparatus 10 or the terminal device 20 is received through the interface unit 322, switch the interface unit 322 to being in the output state based on the second type of communication information. As such, the control unit 324 can perform data transmission with the power supply apparatus 10 or the terminal device 20 through the interface unit 322.

Further, the second type of communication information may be used to indicate that the power supply apparatus 10 or the terminal device 20 needs to read the cable parameter from the first control module 320, for identification of the charging cable 30 based on the cable parameter. In some implementations, the cable parameter may include one or more of a cable transmission current parameter, a cable material, a cable identifier, and a cable length, but is not limited thereto. The cable transmission current parameter may be used to indicate a capability of the charging cable 30 in transporting a current. The cable material may include, but is not limited to, a plastic material, a nylon material, a copper core material, and the like. The cable identifier is the ID information of the charging cable 30, and may be identification information configured for the charging cable 30 before delivery, and may further include the type of a charging interface (not shown) of the charging cable 30, such as a Type-C interface, or a Universal Serial Bus (USB) interface.

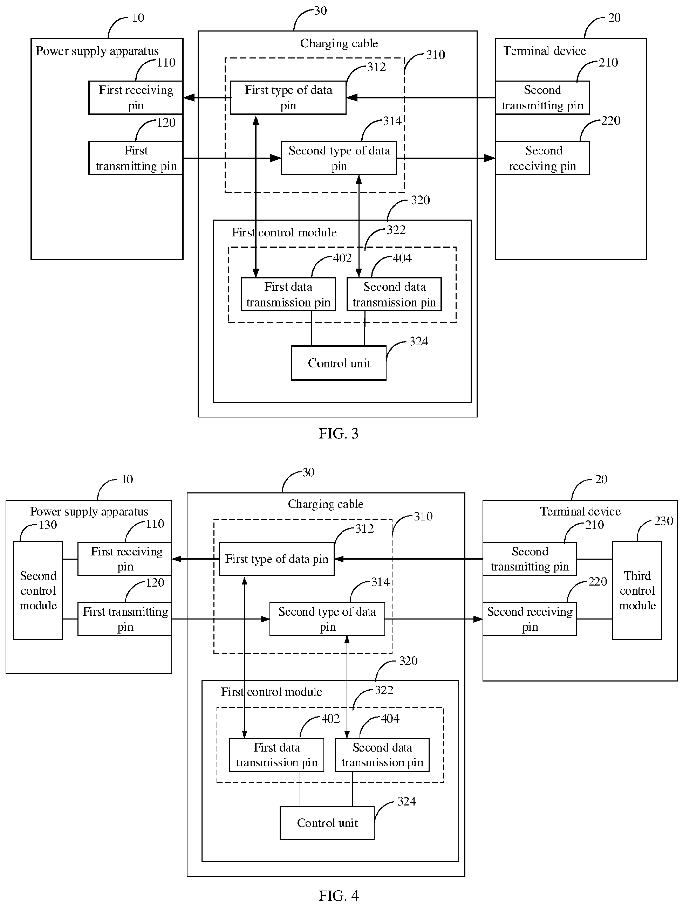

As illustrated in FIG. 3, in an embodiment, the interface unit 322 in the charging cable 30 may include a first data transmission pin 402 and a second data transmission pin 404. The first data transmission pin 402 may be connected, through the data interface 310, with a first receiving pin 110 of the power supply apparatus 10 and a second transmitting pin 210 of the terminal device 20. The second data transmission pin 404 may be connected, through the data interface 310, with a second receiving pin 220 of the terminal device 20 and a first transmitting pin 120 of the power supply apparatus 10. In some implementations, the connection may be a communication connection.

As a specific implementation, the data interface 310 in the charging cable 30 may include a first type of data pin 312 and a second type of data pin 314. The first type of data pin 312 may be configured to be connected with the first receiving pin 110 of the power supply apparatus 10 and the second transmitting pin 210 of the terminal device 20. The second type of data pin 314 may be configured to be connected with the first transmitting pin 120 of the power supply apparatus 10 and the second receiving pin 220 of the terminal device 20.

The first data transmission pin 402 may be connected with the first type of data pin 312, and then may communicate, through the first type of data pin 312, with the first receiving pin 110 of the power supply apparatus 10 and the second transmitting pin 210 of the terminal device 20. The second data transmission pin 404 may be connected with the second type of data pin 314, and then may communicate, through the second type of data pin 314, with the second receiving pin 220 of the terminal device 20 and the first transmitting pin 120 of the power supply apparatus 10.

In some embodiments, there may be two first type of data pins 312, where one first type of data pins 312 is configured to be connected with the first receiving pin 110 of the power supply apparatus 10, and the other first type of data pin 312 is configured to be connected with the second transmitting pin 210 of the terminal device 20. A first data transmission line may be provided between the two first type of data pins 312. There may be two second type of data pins 314, where one second type of data pin 314 is configured to be connected with the first transmitting pin 120 of the power supply apparatus 10, and the other second type of data pin 314 is configured to be connected with the second receiving pin 220 of the terminal device 20. A second data transmission line may be provided between the two second type of data pins 314. In this way, data transmission between the power supply apparatus 10 and the terminal device 20 may be implemented.

In the embodiments of the present disclosure, the first data transmission pin 402 and the second data transmission pin 404 in the first control module 320 may be redefined, so that they can be switched among multiple different working states. In some embodiments, the second type of communication information includes a first command transmitted from the terminal device 20 and a second command transmitted from the power supply apparatus 10.

The control unit 324 is further configured to, when the first command transmitted from the terminal device 20 is received through the first data transmission pin 402, switch the second data transmission pin 404 to being in the output state based on the first command, and control data to be transmitted to the terminal device 20 through the second data transmission pin 404.

When the terminal device 20 needs to communicate with the first control module 320 in the charging cable 30, the terminal device 20 may transmit the first command through the second transmitting pin 210. In the charging cable 30, the first data transmission pin 402 in the receiving state may receive, through the first type of data pin 312, the first command transmitted from the terminal device 20 through the second transmitting pin 210, and forward the first command to the control unit 324. Based on the predefined communication protocol, the control unit 324 determines, based on the first command, that the terminal device 20 needs to communicate with the first control module 320; then the control unit 324 may switch the second data transmission pin 404 from being in the receiving state to being in the output state, and control data to be transmitted to the second receiving pin 220 of the terminal device 20 through the second data transmission pin 404. In the meantime, the working state of the first data transmission pin 402 may be kept at the receiving state, so as to continue to receive, through the first data transmission pin 402, the communication information transmitted from the terminal device 20.

In some implementations, the data transmitted by the control unit 324 may include the cable parameter, and the terminal device 20 may receive, through the second receiving pin 220, the cable parameter transmitted from the control unit 324, Based on the cable parameter, the electronic device 20 may identify the charging cable 30, and determine whether the charging cable 30 meets the requirement for charging at high power, thereby ensuring normal charging in a high-power charging mode such as fast charging, and improving the safety.

In some embodiments, as shown in FIG. 4, the power supply apparatus 10 includes the first receiving pin 110, the first transmitting pin 120, and a second control module 130. When the second control module 130 receives, through the first receiving pin 110, the first command transmitted from the second transmitting pin 210, the second control module 130 may switch the first transmitting pin 120 to being in a non-output state based on the first command, where the non-output state is a working state in which the first transmitting pin 120 cannot output data to the terminal device 20 and the charging cable 30.

In some implementations, the non-output state may include any one of a receiving state, a floating state, and the like, but is not limited thereto. The receiving state is a working state in which the first transmitting pin 120 is capable of receiving data transmitted from the terminal device 20 or the charging cable 30, but cannot transmit data to the terminal device 20 and the charging cable 30. The floating state means a working state in which the first transmitting pin 120 is not capable of transmitting data to the terminal device 20 and the charging cable 30, or receiving data transmitted from the terminal device 20 or the charging cable 30. The first transmitting pin 120 in the floating state may not be connected to any circuit, and the pin is suspended.

When the second control module 130 receives, through the first receiving pin 110, the first command transmitted from the second transmitting pin 210 of the terminal device 20, it may be determined that the terminal device 20 needs to communicate with the charging cable 30. In order to avoid interference with the communication between the terminal device 20 and the charging cable 30, the first transmitting pin 120 may be switched from being in the output state to being in the non-output state. The power supply apparatus 10 thus cannot transmit data to the terminal device 20, thereby ensuring the communication quality between the terminal device 20 and the charging cable 30.

In some embodiments, the first type of communication information includes a third command transmitted from the terminal device 20. The control unit 324 is further configured to, after the second data transmission pin 404 is switched to being in the output state based on the first command, and when the third command transmitted from the terminal device 20 is received through the first data transmission pin 402, switch the second data transmission pin 404 to being in the receiving state based on the third command, the third command indicating that the terminal device 20 needs to communicate with the power supply apparatus 10.

When the terminal device 20 needs to communicate with the power supply apparatus 10, the terminal device 20 may transmit the third command through the second transmitting pin 210. The control unit 324 in the charging cable 30 may receive the third command through the first data transmission pin 402. Based on a predefined communication protocol, the control unit 324 may determine that the terminal device 20 needs to communicate with the power supply apparatus 10. Then, the control unit 324 may switch the second data transmission pin 404 from being in the output state to being in the receiving state. A such, the control unit 324 cannot continue to transmit data to the terminal device 20 through the second data transmission pin 404, thereby avoiding interference with data transmission between the terminal device 20 and the power supply apparatus 10, and ensuring the communication quality between the terminal device 20 and the power supply apparatus 10.

When the second control module 130 of the power supply apparatus 10 receives, through the first receiving pin 110, the third command transmitted from the second transmitting pin 210 of the terminal device, it may be determined that the terminal device 20 needs to communicate with the power supply apparatus 10, and may switch the first transmitting pin 120 from being in the non-output state to being in the output state. When the first transmitting pin 120 is in the output state, the second control module 130 can transmit data to the terminal device 20 or the charging cable 30 through the first transmitting pin 120, and the power supply apparatus 10 may normally communicate with the terminal device 20.

When the second command sent by the power supply apparatus 10 is received through the second data transmission pin 404, The control unit 324 is further configured to switch the first data transmission pin 402 to the output state based on the second command, so as to send data to the power supply apparatus 10 through the first data transmission pin 402.

When the power supply apparatus 10 needs to communicate with the first control module 320 in the charging cable 30, the power supply apparatus 10 may transmit the second command through the first transmitting pin 120. In the charging cable 30, the second data transmission pin 404 in the receiving state receives, through the second type of data pin 314, the second command transmitted from the power supply apparatus 10 through the first transmitting pin 120, and forwards the second command to the control unit 324. Based on the predefined communication protocol, the control unit 324 determines, based on the second command, that the power supply apparatus 10 needs to communicate with the first control module 320. Then, the control unit 324 may switch the first data transmission pin 402 from being in the receiving state to being in the output state, and control data to be transmitted to the first receiving pin 110 of the power supply apparatus 10 through the first data transmission pin 402. In the meantime, the working state of the second data transmission pin 404 may be kept at the receiving state, so as to continue to receive, through the second data transmission pin 404, the communication information transmitted from the power supply apparatus 10.

In some implementations, the data transmitted from the control unit 324 may include the cable parameter, and the power supply apparatus 10 may receive, through the first receiving pin 110, the cable parameter transmitted from the control unit 324. Based on cable parameter, the power supply apparatus 10 may identify the charging cable 30, and determine whether the charging cable 30 meets the requirement for charging at high power, thereby ensuring normal charging in the high-power charging mode such as fast charging, and improving the safety.

In some embodiments, as shown in FIG. 4, the terminal device 20 includes the second transmitting pin 210, the second receiving pin 220, and a third control module 230. When the third control module 230 receives, through the second receiving pin 220, the second command transmitted from the first transmitting pin 120, the third control module 230 may switch the second transmitting pin 210 to being in a non-output state based on the second command, where the non-output state is a working state in which the second transmitting pin 210 does not output data to the terminal device 20 and the charging cable 30.

In some implementations, the non-output state may include any one of a receiving state, a floating state, and the like, but is not limited thereto. In the receiving state, the second transmitting pin 210 can receive data transmitted from the terminal device 20 or the charging cable 30, but cannot transmit data to the terminal device 20 and the charging cable 30. In the floating state, the second transmitting pin 210 can neither transmit data to the first transmitting pin 120, nor receive data transmitted from the terminal device 20 or the charging cable 30. The second transmitting pin 210 in the floating state may not be connected to any circuit, and the pin is suspended.

When the third control module 230 receives, through the second receiving pin 220, the second command transmitted from the first transmitting pin 120 of the power supply apparatus 10, it may be determined that the power supply apparatus 10 needs to communicate with the charging cable 30. In order to avoid interference with the communication between the power supply apparatus 10 and the charging cable 30, the second transmitting pin 210 may be switched from being in the output state to being in the non-output state, and the terminal device 20 thus cannot transmit data to the power supply apparatus 10, thereby ensuring the communication quality between the power supply apparatus 10 and the charging cable 30.

In some embodiments, the first type of communication information includes a fourth command transmitted from the power supply apparatus 10. The control unit 324 is further configured to, after the first data transmission pin 402 is switched to being in the output state based on the second command, and when the fourth command transmitted from the power supply apparatus 10 is received through the second data transmission pin 404, switch the first data transmission pin 402 to being in the receiving state based on the fourth command, the fourth command indicating that the power supply apparatus 10 needs to communicate with the terminal device 20.

When the power supply apparatus 10 needs to communicate with the terminal device 20, the power supply apparatus 10 may transmit the fourth command through the first transmitting pin 120. The control unit 324 in the charging cable 30 may receive the fourth command through the second data transmission pin 404. Based on a predefined communication protocol, the control unit 324 may determine that the power supply apparatus 10 needs to communicate with the terminal device 20. Then, the control unit 324 may switch the first data transmission pin 402 from being in the output state to being in the receiving state. As such, the control unit 324 cannot continue to transmit data to the power supply apparatus 10 through the first data transmission pin 402, thereby avoiding interference with data transmission between the power supply apparatus 10 and the terminal device 20, and ensuring the communication quality between the power supply apparatus 10 and the terminal device 20.

In some implementations, the first type of data pin 312 may be a D- pin, the first receiving pin 110 and the second transmitting pin 210 may be D- pins, and the first data transmission line may be a D-data line. The second type of data pin 314 may be a D+ pin, the first transmitting pin 120 and the second receiving pin 220 may be D+ pins, and the second data transmission line may be a D+ data line, but it is not limited thereto.

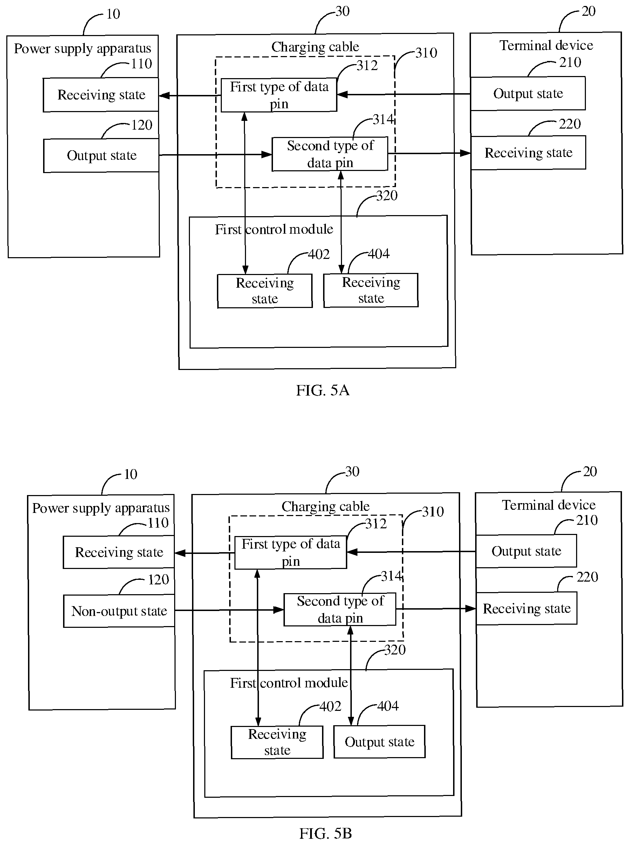

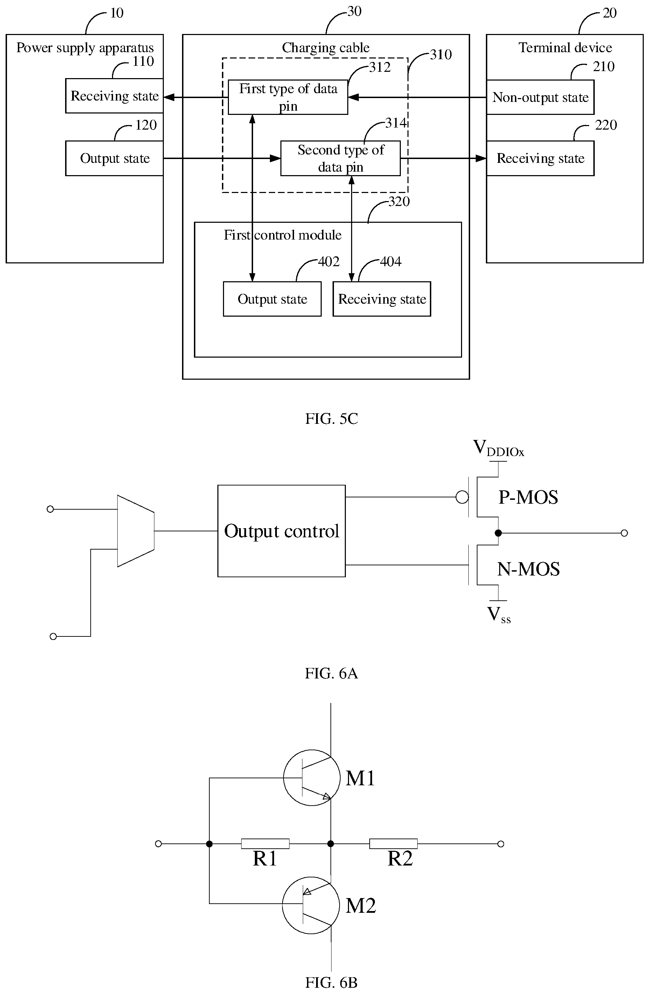

For example, the switching of the working states of individual pins in the foregoing embodiments is described with reference to FIG. 5A to FIG. 5C. FIG. 5A is a schematic diagram illustrating working states of individual pins of the power supply apparatus, the terminal device, and the charging cable when the power supply apparatus and the terminal device communicate with each other, according to an embodiment. FIG. 5B is a schematic diagram illustrating working states of individual pins of the power supply apparatus, the terminal device, and the charging cable when the terminal device and the charging cable communicate with each other, according to an embodiment. FIG. 5C is a schematic diagram illustrating working states of individual pins of the power supply apparatus, the terminal device and the charging cable when the power supply apparatus and the charging cable communicate with each other, according to an embodiment.

In some embodiments, when the power supply apparatus 10 is connected with the terminal device 20 through the charging cable 30, the first data transmission pin 402 and the second data transmission pin 404 of the charging cable 30 may be initialized to being in the receiving state, and the power supply apparatus 10 and the terminal device 20 communicate with each other.

As illustrated in FIG. 5A, when the power supply apparatus 10 and the terminal device 20 communicate with each other, the first receiving pin 110 of the power supply apparatus 10 is in the receiving state, and the first transmitting pin 120 is in the output state. The second transmitting pin 210 of the terminal device 20 is in the output state, and the second receiving pin 220 is in the receive state. The first data transmission pin 402 and the second data transmission pin 404 of the charging cable 30 are both in the receiving state. Data transmission is performed between the power supply apparatus 10 and the terminal device 20, and the charging cable 30 does not interfere with the communication between the power supply apparatus 10 and the terminal device 20.

As illustrated in FIG. 5B, when the terminal device 20 needs to communicate with the charging cable 30, the terminal device 20 may transmit the first command through the second transmitting pin 210. When the charging cable 30 receives the first command through the first data receiving pin 402, the charging cable 30 may switch the second data transmission pin 404 from being in the receiving state to being in the output state. In addition, the power supply apparatus 10 receives the first command through the first receiving pin 110, and then switches the first transmitting pin 120 from being in the output state to being in the non-output state. Therefore, data transmission may be performed between the terminal device 20 and the charging cable 30, and the power supply apparatus 10 does not affect the communication between the terminal device 20 and the charging cable 30.

When the terminal device 20 needs to re-communicate with the power supply apparatus 10, the terminal device 20 may transmit the third command through the second transmitting pin 210. When the charging cable 30 receives the third command through the first data receiving pin 402, the second data transmission pin 404 may be switched from being in the output state to being in the receiving state. In addition, the power supply apparatus 10 receives the third command through the first receiving pin 110, and may then switch the first transmitting pin 120 from being in the non-output state to being in the output state. In this case, the working states of individual pins of the power supply apparatus 10, the terminal device 20, and the charging cable 30 may be those working state as illustrated in FIG. 5A.

As illustrated in FIG. 5C, when the power supply apparatus 10 needs to communicate with the charging cable 30, the power supply apparatus 10 may transmit the second command through the first transmitting pin 120. When the charging cable 30 receives the second command through the second data receiving pin 404, the first data transmission pin 402 may be switched from being in the receiving state to being in the output state. In addition, the terminal device 20 receives the second command through the second receiving pin 220, and may then switch the second transmitting pin 210 from being in the output state to being in the non-output state. In this case, data transmission may be performed between the power supply apparatus 10 and the charging cable 30, and the terminal device 20 does not affect the communication between the power supply apparatus 10 and the charging cable 30.

When the power supply apparatus 10 needs to re-communicate with the terminal device 20, the power supply apparatus 10 may transmit the fourth command through the first transmitting pin 120. When the charging cable 30 receives the fourth command through the second data receiving pin 404, the first data transmission pin 402 may be switched from being in the output state to being in the receiving state. In addition, the terminal device 20 receives the fourth command through the second receiving pin 220, and may then switch the second transmitting pin 210 from being in the non-output state to being in the output state. In this case, the working states of individual pins of the power supply apparatus 10, the terminal device 20, and the charging cable 30 may be those working states as illustrated in FIG. 5A.

In the embodiments of the present disclosure, the physical layer of the communication protocol among the power supply apparatus 10, the terminal device 20, and the charging cable 30 may adopt a serial port communication mechanism, and the first data transmission pin 402 and the second data transmission pin 404 in the first control module 320 of the charging cable 30 are redefined, so that they can be switched among multiple different working states to enable the communication among the charging cable 30, the power supply apparatus 10 and the terminal device 20. By simply modifying the transmitting pins of the power supply apparatus 10 and the terminal device 20, it is ensured that the communication between two of the three is not interfered by the remaining one, and the communication quality is ensured. Furthermore, there is no need to define an additional pin in the power supply apparatus 10 and the terminal device 20, or modify the interfaces of the three into new interfaces, or add an additional signal line in the charging cable 30, and the cost is thus reduced effectively.

In some embodiments, the output state may include any one of outputting at a push-pull output mode and an open-drain output mode, but it is not limited thereto.

In the push-pull output mode, the pin may output a low level and a high level, and it may be ensured that the pin may set the bus to being at a specified potential stably within a specified time when the pin outputs the low level or the high level. By adopting the push-pull output mode, the driving capability of the circuit can be improved, and a larger current such as 2mA (milliampere) or more may be output. FIG. 6A is a schematic circuit diagram illustrating outputting at a push-pull output mode according to an embodiment. As illustrated in FIG. 6A, a P-MOS (P-Metal-Oxide-Semiconductor Field-Effect Transistor) and an N-MOS are controlled respectively by two signals complementary to each other. When the high level is output, the P-MOS is turned on, and the N-MOS is turned off. When the low level is output, the P-MOS is turned off, and the N-MOS is turned on. Thus, the driving capability is high.

In some embodiments, when the pin is in the push-pull output mode, it may be unable to switch to the output state or the receiving state in time, this would affect the normal communication of other devices. For example, when the power supply apparatus 10 and the terminal device 20 communicate with each other, both the first data transmission pin 402 and the second data transmission pin 404 of the charging cable 20 should be in the receiving state. If an abnormal communication occurs, the first data transmission pin 402 or the second data transmission pin 404 of the charging cable 30 may output a low level, which would result in a short circuit between the power supply apparatus 10 and the first control module 320 in the charging cable 30, or between the terminal device 20 and the first control module 320 in the charging cable 30.

The pin in the push-pull output mode may be connected with a resistor in series. For example, the first data transmission pin 402 and the second data transmission pin 404 of the charging cable 20 each may be connected with a resistor in series, or the first transmitting pin 120 of the power supply apparatus 10 may be connected with a resistor in series, or the second transmitting pin 210 of the terminal device 20 may be connected with a resistor in series with a resistor. FIG. 6B is a schematic circuit diagram in which a pin in the push-pull output mode is connected in series with a resistor according to an embodiment. As illustrated in FIG. 6B, two resistors may be connected in series at the pin in the push-pull output state, to limit the short-circuit current output by the pin. It may be noted that the two triodes M1 and M2 in FIG. 6B implement functions similar to functions implemented by the P-MOS and the N-MOS in FIG. 6A. The resistors R1 and R2 connected in series may limit the short-circuit current between the power supply apparatus 10 and the first control module 320 in the charging cable 30, or between the terminal device 20 and the first control module 320 in the charging cable 30, to ensure safety of the devices.

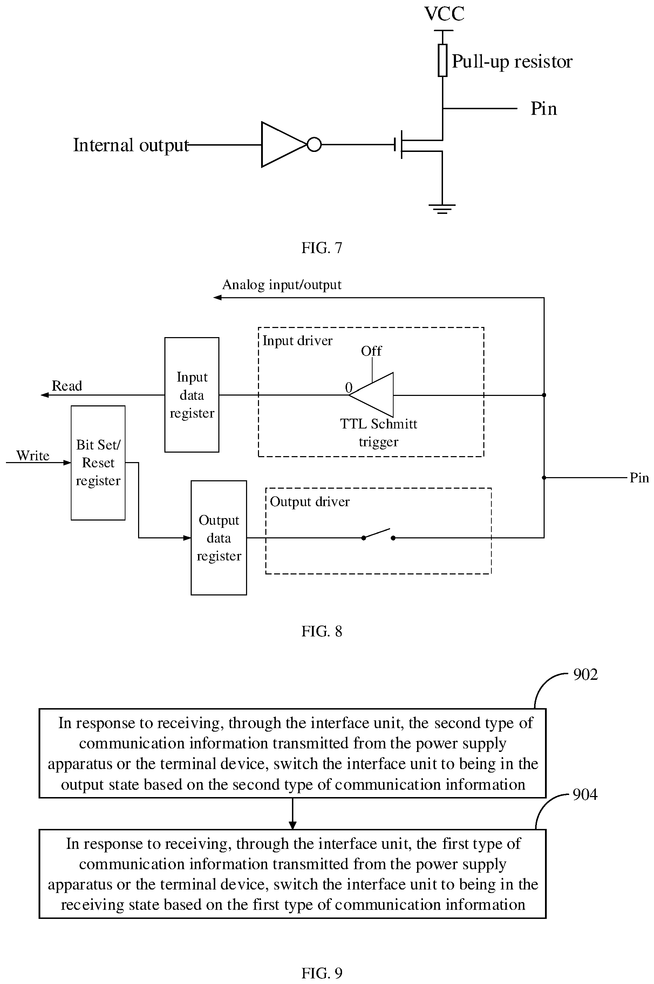

In the open-drain output mode, the pin may output a low level; and when a high level needs to be output, the resistance value of a pull-up resistor may be controlled, and a large current may be output by reducing the resistance value of the pull-up resistor. FIG. 7 is a schematic circuit diagram of outputting at an open-drain output mode according to an embodiment. When the high level is output, the pin may be pulled up to VCC by reducing the resistance of the pull-up resistor. The pull-up resistor may be a pull-up resistor inside the chip or a pull-up resistor outside the chip.

FIG. 8 is a schematic circuit diagram illustrating a non-output state according to an embodiment. As illustrated in FIG. 8, the non-output state may include a high-resistance input state or a floating state. If the pin is switched to being in the high-resistance input state, the output path of the pin is cut off, and it can only receive a message transmitted from the other devices. If the pin is switched to being in the floating state, the pin is suspended, and no message is received and transmitted. The pin in the non-output state do not interfere with communications between other devices.

In the embodiments of the present disclosure, the switching of the working state of each pin may be configured through a register inside the chip. Different working states of individual pins may be defined before delivery, and after different communication information is received, the register may switch the working states of the pins through the control circuit. It may be noted that the different working states of the pins may be working states of the pins themselves, or different working states may be implemented at circuits outside the pins, which is not limited herein.

In the embodiments of the present disclosure, the first data transmission pin 402 and the second data transmission pin 404 in the first control module 320 of the charging cable 30, the first transmitting pin 120 of the power supply apparatus 10, the second transmitting pin 210 of the terminal device 20, and the like are redefined so that they are switchable among different working states, which enables the requirements for the communication among the power supply apparatus 10, the terminal device 20, and the charging cable 30 to be met, and reduces the cost.

As illustrated in FIG. 4, a power supply apparatus 10 is provided according to an example which is useful understanding the invention but outside the scope of the invention as claimed. The power supply apparatus 10 includes a first receiving pin 110, a first transmitting pin 120, and a second control module 130. The first receiving pin 110 is configured to be connected with the second transmitting pin 210 of the terminal device 20 through the charging cable 30. The first transmitting pin 120 is configured to be connected with the second receiving pin 220 of the terminal device 20 through the charging cable 30. In some embodiments, the connection may be a communication connection.

The second control module 130 is configured to, when the communication information transmitted from the terminal device 20 is received through the first receiving pin 110, switch the working state of the first transmitting pin 120 based on the communication information. The working state includes an output state. When the first transmitting pin 120 is in the output state, the second control module 130 can control data to be transmitted to the terminal device 20 or the charging cable 30 through the first transmitting pin 120.

In an embodiment, the working state further includes a non-output state, and the non-output state is a working state in which the first transmitting pin 120 cannot transmit data to the terminal device 20 and the charging cable 30. When the first transmitting pin 120 is in the non-output state, the second control module 130 cannot control data to be transmitted to the terminal device 20 and the charging cable 30 through the first transmitting pin 120. The communication information includes a second type of communication information.

The second control module 130 is further configured to, when the second type of communication information transmitted from the terminal device 20 is received through the first receiving pin 110, switch the first transmitting pin 120 to being in the non-output state based on the second type of communication information.

In an embodiment, the communication information includes a first type of communication information, and the working state includes an output state.

The second control module 130 is further configured to, after the first transmitting pin 120 is switched to the non-output state based on the second type of communication information, and when the first type of communication information transmitted from the terminal device 20 is received through the first receiving pin 110, switch the first transmitting pin 120 to being in the output state based on the first type of communication information.

As a specific implementation, the first receiving pin 110 is configured to be connected, through the data interface 310 of the charging cable 30, with each of the second transmitting pin 210 of the terminal device 20 and the first data transmission pin 402 of the charging cable 30. The first transmitting pin 120 is configured to be connected, through the data interface 310 of the charging cable 30, with the second receiving pin 220 of the terminal device 20 and the second data transmission pin 404 of the charging cable 30.

The second control module 130 is further configured to: transmit a second command to the second data transmission pin 404 of the charging cable 30 through the first transmitting pin 120, so that the charging cable 30 switches the first data transmission pin 402 to being in the output state based on the second command; and receive, through the first receiving pin 110, the data transmitted from the first data transmission pin 402.

In the embodiments of the present disclosure, the power supply apparatus 10 may flexibly switch the working state of the first transmitting pin 120 based on the communication information transmitted from the terminal device 20. When the terminal device 20 needs to communicate with the charging cable 30, the power supply apparatus 10 switches the first transmitting pin 120 to being in the non-output state, so as not to affect the communication between the terminal device 20 and the charging cable 30, which ensures the communication quality between the terminal device 20 and the charging cable 30. When the terminal device 20 needs to communicate with the power supply apparatus 10, the power supply apparatus 10 switches the first transmitting pin 120 back to being in the output state, so that the normal communication with the terminal device 20 and the charging cable 30 can be performed. This enables the requirements for the communication among the terminal device 20, the power supply apparatus 10, and the charging cable 30 to be met without adding an additional pin, thereby reducing the cost.

As illustrated in FIG. 4, a terminal device 20 is provided according to an example which is useful understanding the invention but outside the scope of the invention as claimed. The terminal device 20 may include a second transmitting pin 210, a second receiving pin 220, and a third control module 230. The second transmitting pin 210 is configured to be connected with the first receiving pin 110 of the power supply apparatus 10 through the charging cable 30. The second receiving pin 220 is configured to be connected with the first transmitting pin 120 of the power supply apparatus 10 through the charging cable 30. In some embodiments, the connection may be a communication connection.

The third control module 230 is configured to, when communication information transmitted from the power supply apparatus 10 is received through the second receiving pin 220, switch a working state of the second transmitting pin 210 based on the communication information. The working state includes an output state. When the second transmitting pin 210 is in the output state, the third control module 230 can control data to be transmitted to the power supply apparatus 10 or the charging cable 30 through the second transmitting pin 210.

In an embodiment, the working state further includes a non-output state, and the non-output state is a working state in which the second transmitting pin 210 cannot transmit data to the power supply apparatus 10 and the charging cable 30. When the second transmitting pin 210 is in the non-output state, the third control module 230 cannot control data to be transmitted to the power supply apparatus 10 and the charging cable 30 through the second transmitting pin 210. The communication information includes a second type of communication information.

The third control module 230 is further configured to, when the second type of communication information transmitted from the power supply apparatus 10 is received through the second receiving pin 220, switch the second transmitting pin 210 to being in the non-output state based on the second type of communication information.

In an embodiment, the communication information includes a first type of communication information.

The third control module 230 is further configured to, after the second transmitting pin 210 is switched to being in the non-output state based on the second type of communication information, and when the first type of communication information transmitted from the power supply apparatus 10 is received through the second receiving pin 220, switch the second transmitting pin 210 to being in the output state based on the first type of communication information.

As a specific implementation, the second transmitting pin 210 is configured to be connected, through the data interface 310 of the charging cable 30, with the first receiving pin 110 of the power supply apparatus 10 and the first data transmission pin 402 of the charging cable. The second receiving pin 220 is configured to be connected, through the data interface 310 of the charging cable 30, with the first transmitting pin 120 of the power supply apparatus 10 and the second data transmission pin 404 of the charging cable 30.

The third control module 230 is further configured to: transmit a first command to the first data transmission pin 402 of the charging cable 30 through the second transmitting pin 210, so that the charging cable 30 switches the second data transmission pin 404 to being in the output state based on the first command; and receive, through the second receiving pin 220, the data transmitted from the second data transmission pin 404.

In the embodiments of the present disclosure, the terminal device 20 may flexibly switch the working state of the second transmitting pin 210 based on the communication information transmitted from the power supply apparatus 10. When the power supply apparatus 10 needs to communicate with the charging cable 30, the terminal device 20 switches the second transmitting pin 210 to being in the non-output state, so as not to affect the communication between the power supply apparatus 10 and the charging cable 30, which ensures the communication quality between the power supply apparatus 10 and the charging cable 30. When the power supply apparatus 10 needs to communicate with the terminal device 20, the terminal device 20 switches the second transmitting pin 210 back to being in the output state, so that the normal communication with the power supply apparatus 10 and the charging cable 30 can be performed. This enables the requirements for the communication among the terminal device 20, the power supply apparatus 10 and the charging cable 30 to be met without adding an additional pin, thereby reducing the cost.

According to an embodiment, a communication system is provided. The communication system may include the charging cable 30 as described in the foregoing embodiments, the power supply apparatus 10 as described in the foregoing embodiments, and the terminal device 20 as described in the foregoing embodiments. The power supply apparatus 10 is connected with the terminal device 20 through the charging cable 30, and provides a charging voltage and a charging current to the terminal device 20 through the charging cable 30. The power supply apparatus 10 and the terminal device 20 also perform data transmission therebetween through the charging cable 30.

When data transmission is performed between the power supply apparatus 10 and the terminal device 20, the charging cable 30 is in a state capable of receiving data transmitted from the power supply apparatus 10 or the terminal device 20. When data transmission is performed between the charging cable 30 and the power supply apparatus 10 or the terminal device 20, the charging cable 30 is in a state capable of transmitting data to the power supply apparatus 10 or the terminal device 20.

In an embodiment, when data transmission is performed between the power supply apparatus 10 and the terminal device 20 or the charging cable 30, the power supply apparatus 10 is in a state capable of transmitting data to the terminal device 20 or the charging cable 30, When data transmission is performed between the terminal device 20 and the charging cable 30, the power supply apparatus 10 is in a state of not transmitting data to the terminal device 20 and the charging cable 30.

When data transmission is performed between the terminal device 20 and the power supply apparatus 10 or the charging cable 30, the terminal device 20 is in a state capable of transmitting data to the power supply apparatus 10 or the charging cable 30. When data transmission is performed between the power supply apparatus 10 and the charging cable 30, the terminal device is in a state of not transmitting data to the power supply apparatus 10 and the charging cable 30.

In the embodiments of the present disclosure, when data transmission is performed between any two of the three devices, i.e., the power supply apparatus 10, the terminal device 20, and the charging cable 30 perform data transmission, the remaining one device is in a state of not transmitting data, and it does not affect the communication between the two devices which perform the data transmission. This ensures the communication quality among the power supply apparatus 10, the terminal device 20, and the charging cable 30.

In an embodiment, a communication method is provided, which is applied to the charging cable described in the foregoing embodiments. The method includes: in response to receiving, through the interface unit, communication information transmitted from the power supply apparatus or the terminal device, switching the working state of the interface unit based on the communication information.

The working state includes a receiving state and an output state. When the interface unit is in the receiving state, the interface unit is capable of receiving the data transmitted from the power supply apparatus or the terminal device. When the interface unit is in the output state, the interface unit is capable of transmitting data to the power supply apparatus or the terminal device.

In an embodiment, the communication information includes a first type of communication information and a second type of communication information. As illustrated in FIG. 9, the operation of switching the working state of the interface unit based on the communication information in response to receiving, through the interface unit, the communication information transmitted from the power supply apparatus or the terminal device may include the following operations.

At block 902, in response to receiving, through the interface unit, the second type of communication information transmitted from the power supply apparatus or the terminal device, the interface unit is switched to being in the output state based on the second type of communication information.

In an embodiment, the second type of communication information includes a first command and a second command. Block 902 may include: in response to receiving, through the first data transmission pin, the first command transmitted from the terminal device, switching the second data transmission pin to being in the output state based on the first command, and transmitting data to the terminal device through the second data transmission pin; and in response to receiving, through the second data transmission pin, the second command transmitted from the power supply apparatus, switching the first data transmission pin to being in the output state based on the second command, and transmitting data to the power supply apparatus through the first data transmission pin.

At block 904, in response to receiving, through the interface unit, the first type of communication information transmitted from the power supply apparatus or the terminal device, the interface unit is switched to being in the receiving state based on the first type of communication information.

In an embodiment, the first type of communication information includes a third command and a fourth command. Block 904 may include: after switching the second data transmission pin to being in the output state based on the first command, and in response to receiving, through the first data transmission pin, the third command transmitted from the terminal device, switching the second data transmission pin to being in the receiving state based on the third command; and after switching the first data transmission pin to being in the output state based on the second command, and in response to receiving, through the second data transmission pin, the fourth command transmitted from the power supply apparatus, switching the first data transmission pin to being in the receiving state based on the fourth command.

In the embodiments of the present disclosure, the charging cable flexibly switches the working state of the interface unit based on the communication information transmitted from the power supply apparatus and the terminal device, so that the requirements for the communication between the power supply apparatus and the terminal device, the communication between the power supply apparatus and the charging cable, and the communication between the terminal device and the charging cable can be met. There is no need to add an additional pin in the power supply apparatus or the terminal device, and the communication is performed using the original data transmission line in the charging cable without adding a new signal line. Therefore, the cost is reduced.

In an example which is useful understanding the invention but outside the scope of the invention as claimed, another communication method is provided, which may be applied to the power supply apparatus described in the foregoing embodiments. The method includes: in response to receiving, through the first receiving pin, communication information transmitted from a terminal device, switching a working state of the first transmitting pin based on the communication information.

The working state includes an output state. When the first transmitting pin is in the output state, the first transmitting pin can transmit data to the terminal device or the charging cable.

In an embodiment, the working state further includes a non-output state. When the first transmitting pin is in the non-output state, the first transmitting pin is incapable of transmitting data to the terminal device or the charging cable. The communication information includes the first type of communication information and second type of communication information. The operation of switching the working state of the first transmitting pin based on the communication information in response to receiving, through the first receiving pin, the communication information transmitted from the terminal device includes:
in response to receiving, through the first receiving pin, the second type of communication information transmitted from the terminal device, switching the first transmitting pin to being in the non-output state based on the second type of communication information; and in response to receiving, through the first receiving pin, the first type of communication information transmitted from the terminal device, switching the first transmitting pin to being in the output state based on the first type of communication information.

In an embodiment, the method further includes: transmitting a second command to the second data transmission pin of the charging cable through the first transmitting pin, so that the charging cable switches the first data transmission pin to being in the output state based on the second command; and receiving, through the first receiving pin, the data transmitted from the first data transmission pin.

In the embodiments of the present disclosure, the power supply apparatus can flexibly switch the working state of the first transmitting pin based on the communication information transmitted from the terminal device, which enables the requirements for the communication among the terminal device, the power supply apparatus, and the charging cable to be met. In addition, there is no need to add an additional pin, and the cost is reduced.

In an example which is useful understanding the invention but outside the scope of the invention as claimed, another communication method is provided, which may be applied to the terminal device described in the foregoing embodiments. The method may include: in response to receiving, through the second receiving pin, communication information transmitted from the power supply apparatus, switching the working state of the second transmitting pin based on the communication information.

The working state includes an output state. When the second transmitting pin is in the output state, the second transmitting pin can transmit data to the power supply apparatus or the charging cable.

In an embodiment, the working state further includes a non-output state. When the second transmitting pin is in the non-output state, the second transmitting pin is not capable of transmitting data to the power supply apparatus and the charging cable. The communication information includes the first type of communication information and second type of communication information.

The operation of switching the working state of the second transmitting pin based on the communication information in response to receiving, through the second receiving pin, the communication information transmitted from the power supply apparatus includes: in response to receiving, through the second receiving pin, the second type of communication information transmitted from the power supply apparatus, switching the second transmitting pin to being in the non-output state based on the second type of communication information; and in response to receiving, through the second receiving pin, the first type of communication information transmitted from the power supply apparatus, switching the second transmitting pin to being in the output state based on the first type of communication information.

In an embodiment, the method further includes: transmitting a first command to the first data transmission pin of the charging cable through the second transmitting pin, so that the charging cable switches the second data transmission pin to being in the output state based on the first command; and receiving, through the second receiving pin, the data transmitted from the second data transmission pin.

In the embodiments of the present disclosure, the terminal device may flexibly switch the working state of the second transmitting pin based on the communication information transmitted from the power supply apparatus, which enables the requirements for the communication among the terminal device, the power supply apparatus, and the charging cable to be met. In addition, there is no need to add an additional pin, and the cost is reduced.

The embodiments of the present disclosure provide a charging cable, where the charging cable includes a memory and a processor, which is an example which is useful understanding the invention but outside the scope of the invention as claimed. The memory stores a computer program which, when being executed by the processor, causes the processor to implement the communication method applied to the charging cable as described in the foregoing embodiments.

The embodiments of the present disclosure provide a computer-readable storage medium storing a computer program, which is an example which is useful understanding the invention but outside the scope of the invention as claimed. The computer program, when being executed by a processor, causes the communication method applied to the charging cable as described in the foregoing embodiments to be implemented.

The embodiments of the present disclosure provide a computer program product, where the computer program product includes a non-transitory computer-readable storage medium storing a computer program, which is an example which is useful understanding the invention but outside the scope of the invention as claimed. The computer program, when being executed by a processor, causes the communication method applied to the charging cable as described in the foregoing embodiments to be implemented.

The embodiments of the present disclosure provide a power supply apparatus, where the power supply apparatus includes a memory and a processor, which is an example which is useful understanding the invention but outside the scope of the invention as claimed. The memory stores a computer program which, when being executed by the processor, causes the processor to implement the communication method applied to the power supply apparatus as described in the foregoing embodiments.

The embodiments of the present disclosure provide a computer-readable storage medium storing a computer program, which is an example which is useful understanding the invention but outside the scope of the invention as claimed. The computer program, when being executed by a processor, causes the communication method applied to the power supply apparatus as described in the foregoing embodiments to be implemented.

The embodiments of the present disclosure provide a computer program product, where the computer program product includes a non-transitory computer-readable storage medium storing a computer program, which is an example which is useful understanding the invention but outside the scope of the invention as claimed. The computer program, when being executed by a processor, causes the communication method applied to the power supply apparatus as described in the foregoing embodiments to be implemented.

The embodiments of the present disclosure provide a terminal device, where the terminal device includes a memory and a processor, which is an example which is useful understanding the invention but outside the scope of the invention as claimed. The memory stores a computer program which, when being executed by the processor, causes the processor to implement the communication method applied to the terminal device as described in the foregoing embodiments.

The embodiments of the present disclosure provide a computer-readable storage medium storing a computer program, which is an example which is useful understanding the invention but outside the scope of the invention as claimed. The computer program, when being executed by a processor, causes the communication method applied to the terminal device as described in the foregoing embodiments to be implemented.

The embodiments of the present disclosure provide a computer program product, where the computer program product includes a non-transitory computer-readable storage medium storing a computer program, which is an example which is useful understanding the invention but outside the scope of the invention as claimed. The computer program, when being executed by a processor, causes the communication method applied to the terminal device as described in the foregoing embodiments to be implemented.

A person of ordinary skill in the art may understand that all or part of the processes in the foregoing method embodiments may be implemented by instructing a related hardware with a computer program, where the program may be stored in a non-transitory computer-readable storage medium. When the program is executed, the processes of the foregoing method embodiments may be implemented. The storage medium may be a magnetic disk, an optical disk, a Read-Only Memory (ROM), or the like.

Any reference to a memory, storage, database, or other medium as used herein may include a non-volatile memory and/or a volatile memory. A suitable non-volatile memory may include ROM, programmable ROM (PROM), erasable PROM (EPROM), electrically erasable PROM (EEPROM), or flash memory. The volatile memory may include random access memory (RAM), which serves as an external cache. By way of illustration and not limitation, RAM is available in a variety of forms, such as static RAM (SRAM), Dynamic Random Access Memory (DRAM), synchronous DRAM (SDRAM), Double Data Rate SDRAM (DDR SDRAM), Enhanced Synchronous DRAM (ESDRAM), Synchlink DRAM (SLDRAM), Rambus RAM (RDRAM), and Direct Rambus DRAM (DRDRAM).

The technical features of the foregoing embodiments may be combined arbitrarily, and all possible combinations of the technical features in the foregoing embodiments are not described for concise. However, as long as there is no contradiction in the combination of these technical features, it should be considered as falling in the scope described in the specification.

The foregoing embodiments only illustrate several implementations of the present disclosure, and their descriptions are relatively specific and detailed, but they should not be construed as limiting the scope of the present disclosure. It is notable for those skilled in the art that, several variations and improvements may be made by those skilled in the art without departing from the concept of the present disclosure, and all of them should fall within the protection scope of the present disclosure. Accordingly, the protection scope of the present disclosure is subject to the appended claims.

## Claims

1. A charging cable (30), comprising:
a data interface (310), configured to be connected with a power supply apparatus (10) and a terminal device (20); and
a first control module (320) comprising:
an interface unit (322), connected with the data interface (310), and configured to communicate, through the data interface (310), with the power supply apparatus (10) and the terminal device (20); and
a control unit (324), configured to, upon receipt, through the interface unit (322), of communication information transmitted from the power supply apparatus (10) or the terminal device (20), switch a working state of the interface unit (322) based on the communication information;
wherein the working state comprises a receiving state and an output state; when the interface unit (322) is in the receiving state, the control unit (324) is capable of receiving, through the interface unit (322), the data transmitted from the power supply apparatus (10) or the terminal device (20); and when the interface unit (322) is in the output state, the control unit (324) is capable of controlling data to be transmitted to the power supply apparatus (10) or the terminal device (20) through the interface unit (322);
**characterized in that**,
when the interface unit (322) is in the receiving state, the control unit (324) is incapable of transmitting, through the interface unit (322), data to the power supply apparatus (10) or the terminal device (20); and
when the interface unit (322) is in the output state, the control unit (324) is further capable of receiving, through the interface unit (322), the data transmitted from the power supply apparatus (10) or the terminal device (20).

2. The charging cable (30) of claim 1, wherein the communication information comprises a first type of communication information configured to indicate that communication needs to be performed between the power supply apparatus (10) and the terminal device (20); and
the control unit (324) is configured to, upon receipt, through the interface unit (322), of the first type of communication information transmitted from the power supply apparatus (10) or the terminal device (20), switch the interface unit (322) to being in the receiving state based on the first type of communication information.

3. The charging cable (30) of any one of claims 1-2, wherein the communication information further comprises a second type of communication information configured to indicate the power supply apparatus (10) or the terminal device (20) needs to communicate with the charging cable (30); and
the control unit (324) is further configured to, upon receipt, through the interface unit (322), of the second type of communication information transmitted from the power supply apparatus (10) or the terminal device (20), switch the interface unit (322) to being in the output state based on the second type of communication information.

4. The charging cable (30) of any one of claims 1-3, wherein the interface unit (322) comprises:
a first data transmission pin (402), configured to be connected, through the data interface (310), with a first receiving pin (110) of the power supply apparatus (10) and a second transmitting pin (210) of the terminal device (20); and
a second data transmission pin (404), configured to be connected, through the data interface (310), with a second receiving pin (220) of the terminal device (20) and a first transmitting pin (120) of the power supply apparatus (10).

5. The charging cable (30) of any one of claims 3-4, wherein the second type of communication information comprises a first command and a second command, the first command indicating that the terminal device (20) needs to communicate with the charging cable (30), and the second command indicating that the power supply apparatus (10) needs to communicate with the charging cable (30);
the control unit (324) is further configured to, upon receipt, through the first data transmission pin (402), of the first command transmitted from the terminal device (20), switch the second data transmission pin (404) to being in the output state based on the first command, and control data to be transmitted to the terminal device (20) through the second data transmission pin (404); and
the control unit (324) is further configured to, upon receipt, through the second data transmission pin (404), of the second command transmitted from the power supply apparatus (10), switch the first data transmission pin (402) to being in the output state based on the second command, and control data to be transmitted to the power supply apparatus (10) through the first data transmission pin (402).

6. The charging cable (30) of claim 5, wherein the control unit (324) is further configured to, after the second data transmission pin (404) is switched to being in the output state based on the first command, and upon receipt, through the first data transmission pin (402), of a third command transmitted from the terminal device (20), switch the second data transmission pin (404) to being in the receiving state based on the third command, the third command indicating that the terminal device (20) needs to communicate with the power supply apparatus (10); and
the control unit (324) is further configured to, after the first data transmission pin (402) is switched to being in the output state based on the second command, and upon receipt, through the second data transmission pin (404), of a fourth command transmitted from the power supply apparatus (10), switch the first data transmission pin (402) to being in the receiving state based on the fourth command, the fourth command indicating that the power supply apparatus (10) needs to communicate with the terminal device (20).

7. The charging cable (30) of any one of claims 5-6, wherein the output state comprises any one of outputting at a push-pull output mode and an open-drain output mode.

8. The charging cable (30) of any one of claims 3-6, wherein the control unit (324) is further configured to transmit a stored cable parameter to the power supply apparatus (10) or the terminal device (20), after the interface unit (322) is switched to being in the output state based on the second type of communication information, the cable parameter comprising one or more of a cable transmission current parameter, a cable material, a cable identifier, and a cable length.

9. The charging cable (30) of any one of claims 1-8, wherein the data interface (310) comprises a first type of data pin (312) and a second type of data pin (314); and
wherein the first type of data pin (312) is configured to be connected with the first receiving pin (110) of the power supply apparatus (10) and the second transmitting pin (210) of the terminal device (20); and
the second type of data pin (314) is configured to be connected with the first transmitting pin (120) of the power supply apparatus (10) and the second receiving pin (220) of the terminal device (20).

10. A communication system, comprising a charging cable (30) of any one of claims 1-9, a power supply apparatus (10), and a terminal device (20), wherein the power supply apparatus (10) is connected with the terminal device (20) through the charging cable (30).

11. A communication method, for a charging cable (30), the charging cable (30) comprising a data interface (310) and an interface unit (322) connected with the data interface (310), the interface unit (322) being configured to communicate with a power supply apparatus (10) and a terminal device (20) through the data interface (310);
wherein the method comprises:
in response to receiving, through the interface unit (322), communication information transmitted from the power supply apparatus (10) or the terminal device (20), switching a working state of the interface unit (322) based on the communication information;
wherein the working state comprises a receiving state and an output state; when the interface unit is in the receiving state, the interface unit (322) is capable of receiving data transmitted from the power supply apparatus (10) or the terminal device (20); and when the interface unit (322) is in the output state, the interface unit (322) is capable of transmitting data to the power supply apparatus (10) or the terminal device (20);
**characterized in that**,
when the interface unit (322) is in the receiving state, a control unit (324) of the a charging cable (30) is incapable of transmitting, through the interface unit (322), data to the power supply apparatus (10) or the terminal device (20); and
when the interface unit (322) is in the output state, the control unit (324) is further capable of receiving, through the interface unit (322), the data transmitted from the power supply apparatus (10) or the terminal device (20).

## Patentansprüche

1. Ladekabel (30), umfassend:
eine Datenschnittstelle (310), welche zum Verbinden mit einer Stromversorgungseinrichtung (10) und einer Endgerätvorrichtung (20) konfiguriert ist; und
ein erstes Steuerungsmodul (320), umfassend:
eine Schnittstelleneinheit (322), welche mit der Datenschnittstelle (310) verbunden ist und dazu konfiguriert ist, über die Datenschnittstelle (310) mit der Stromversorgungseinrichtung (10) und der Endgerätvorrichtung (20) zu kommunizieren; und
eine Steuereinheit (324), welche dazu konfiguriert ist, nach Empfang, über die Schnittstelleneinheit (322), von Kommunikationsinformationen, welche von der Stromversorgungseinrichtung (10) oder der Endgerätvorrichtung (20) übertragen wurden, einen Betriebszustand der Schnittstelleneinheit (322) basierend auf den Kommunikationsinformationen umzuschalten;
wobei der Betriebszustand einen Empfangszustand und einen Ausgabezustand umfasst; wenn sich die Schnittstelleneinheit (322) im Empfangszustand befindet, die Steuereinheit (324) in der Lage ist, die von der Stromversorgungseinrichtung (10) oder der Endgerätvorrichtung (20) übertragenen Daten über die Schnittstelleneinheit (322) zu empfangen; und wenn sich die Schnittstelleneinheit (322) im Ausgabezustand befindet, die Steuereinheit (324) in der Lage ist, die über die Schnittstelleneinheit (322) an die Stromversorgungseinrichtung (10) oder die Endgerätvorrichtung (20) zu übertragenden Daten zu steuern;
**dadurch gekennzeichnet, dass**
wenn sich die Schnittstelleneinheit (322) im Empfangszustand befindet, die Steuereinheit (324) nicht in der Lage ist, Daten an die Stromversorgungseinrichtung (10) oder die Endgerätvorrichtung (20) über die Schnittstelleneinheit (322) zu übertragen; und
wenn sich die Schnittstelleneinheit (322) im Ausgabezustand befindet, die Steuereinheit (324) weiter in der Lage ist, die von der Stromversorgungseinrichtung (10) oder der Endgerätvorrichtung (20) übertragenen Daten über die Schnittstelleneinheit (322) zu empfangen.

2. Ladekabel (30) nach Anspruch 1, wobei die Kommunikationsinformationen einen ersten Typ von Kommunikationsinformationen umfassen, welche dazu konfiguriert sind, anzugeben, dass Kommunikation zwischen der Stromversorgungseinrichtung (10) und der Endgerätvorrichtung (20) erforderlich ist; und
die Steuereinheit (324) dazu konfiguriert ist, nach Empfang, über die Schnittstelleneinheit (322), des ersten Typs von Kommunikationsinformationen, welche von der Stromversorgungseinrichtung (10) oder der Endgerätvorrichtung (20) übertragen wurden, die Schnittstelleneinheit (322) basierend auf dem ersten Typ von Kommunikationsinformationen in den Empfangszustand umzuschelten.

3. Ladekabel (30) nach einem der Ansprüche 1-2, wobei die Kommunikationsinformationen weiter einen zweiten Typ von Kommunikationsinformationen umfassen, welche dazu konfiguriert sind, anzugeben, dass die Stromversorgungseinrichtung (10) oder die Endgerätvorrichtung (20) mit dem Ladekabel (30) kommunizieren müssen; und
die Steuereinheit (324) weiter dazu konfiguriert ist, nach Empfang, über die Schnittstelleneinheit (322), des zweiten Typs von Kommunikationsinformationen, welche von der Stromversorgungseinrichtung (10) oder der Endgerätvorrichtung (20) übertragen wurden, die Schnittstelleneinheit (322) basierend auf dem zweiten Typ von Kommunikationsinformationen in den Ausgabezustand umzuschalten.

4. Ladekabel (30) nach einem der Ansprüche 1-3, wobei die Schnittstelleneinheit (322) umfasst:
einen ersten Datenübertragungsstift (402), welcher dazu konfiguriert ist, über die Datenschnittstelle (310) mit einem ersten Empfangsstift (110) der Stromversorgungseinrichtung (10) und einem zweiten Übertragungsstift (210) der Endgerätvorrichtung (20) verbunden zu werden; und
einen zweiten Datenübertragungsstift (404), welcher dazu konfiguriert ist, über die Datenschnittstelle (310) mit einem zweiten Empfangsstift (220) der Endgerätvorrichtung (20) und einem ersten Übertragungsstift (120) der Stromversorgungseinrichtung (10) verbunden zu werden.

5. Ladekabel (30) nach einem der Ansprüche 3-4, wobei die Kommunikationsinformationen des zweiten Typs einen ersten Befehl und einen zweiten Befehl umfassen, wobei der erste Befehl angibt, dass die Endgerätvorrichtung (20) mit dem Ladekabel (30) kommunizieren muss, und wobei der zweite Befehl angibt, dass die Stromversorgungseinrichtung (10) mit dem Ladekabel (30) kommunizieren muss;
die Steuereinheit (324) weiter dazu konfiguriert ist, nach Empfang, durch den ersten Datenübertragungsstift (402), des ersten Befehls, welcher von der Endgerätvorrichtung (20) übertragen wurde, den zweiten Datenübertragungsstift (404) basierend auf dem ersten Befehl in den Ausgabezustand umzuschalten, und Daten zu steuern, welche über den zweiten Datenübertragungsstift (404) an die Endgerätvorrichtung (20) zu übertragen sind; und
die Steuereinheit (324) weiter dazu konfiguriert ist, nach Empfang, durch den zweiten Datenübertragungsstift (404), des zweiten Befehls, welcher von der Stromversorgungseinrichtung (10) übertragen wurde, den ersten Datenübertragungsstift (402) basierend auf dem zweiten Befehl in den Ausgabezustand umzuschalten, und Daten zu steuern, welche über den ersten Datenübertragungsstift (402) an die Stromversorgungseinrichtung (10) zu übertragen sind.

6. Ladekabel (30) nach Anspruch 5, wobei die Steuereinheit (324) weiter dazu konfiguriert ist, nachdem der zweite Datenübertragungsstift (404) basierend auf dem ersten Befehl in den Ausgabezustand umgeschaltet wurde, und nach Empfang eines dritten Befehls, welcher durch den ersten Datenübertragungsstift (402) von der Endgerätvorrichtung (20) übertragen wurde, den zweiten Datenübertragungsstift (404) basierend auf dem dritten Befehl in den Empfangszustand umzuschalten, und wobei der dritte Befehl angibt, dass die Endgerätvorrichtung (20) mit der Stromversorgungseinrichtung (10) kommunizieren muss; und
die Steuereinheit (324) weiter dazu konfiguriert ist, nachdem der erste Datenübertragungsstift (402) basierend auf dem zweiten Befehl in den Ausgabezustand umgeschaltet wurde, und nach Empfang eines vierten Befehls, welcher durch den zweiten Datenübertragungsstift (404) von der Stromversorgungseinrichtung (10) übertragen wurde, den ersten Datenübertragungsstift (402) basierend auf dem vierten Befehl in den Empfangszustand umzuschalten, wobei der vierte Befehl angibt, dass die Stromversorgungseinrichtung (10) mit der Endgerätvorrichtung (20) kommunizieren muss.

7. Ladekabel (30) nach einem der Ansprüche 5-6, wobei der Ausgabezustand eines von Ausgeben in einem Push-Pull-Ausgabemodus oder einem Open-Drain-Ausgabemodus umfasst.

8. Ladekabel (30) nach einem der Ansprüche 3-6, wobei die Steuereinheit (324) weiter dazu konfiguriert ist, einen gespeicherten Kabelparameter an die Stromversorgungseinrichtung (10) oder die Endgerätvorrichtung (20) zu übertragen, nachdem die Schnittstelleneinheit (322) basierend auf dem zweiten Typ von Kommunikationsinformationen in den Ausgabezustand umgeschaltet wurde, wobei der Kabelparameter eines oder mehrere von einem Kabelübertragungsstromparameter, einem Kabelmaterial, einer Kabelkennung und einer Kabellänge umfasst.

9. Ladekabel (30) nach einem der Ansprüche 1-8, wobei die Datenschnittstelle (310) einen ersten Typ von Datenstift (312) und einen zweiten Typ von Datenstift (314) umfasst; und
wobei der erste Typ von Datenstift (312) dazu konfiguriert ist, mit dem ersten Empfangsstift (110) der Stromversorgungseinrichtung (10) und dem zweiten Übertragungsstift (210) der Endgerätvorrichtung (20) verbunden zu werden; und
der zweite Typ von Datenstift (314) dazu konfiguriert ist, mit dem ersten Übertragungsstift (120) der Stromversorgungseinrichtung (10) und dem zweiten Empfangsstift (220) der Endgerätvorrichtung (20) verbunden zu werden.

10. Kommunikationssystem, umfassend ein Ladekabel (30) nach einem der Ansprüche 1-9, eine Stromversorgungseinrichtung (10) und eine Endgerätvorrichtung (20), wobei die Stromversorgungseinrichtung (10) über das Ladekabel (30) mit der Endgerätvorrichtung (20) verbunden ist.

11. Kommunikationsverfahren für ein Ladekabel (30), wobei das Ladekabel (30) eine Datenschnittstelle (310) und eine mit der Datenschnittstelle (310) verbundene Schnittstelleneinheit (322) umfasst, wobei die Schnittstelleneinheit (322) dazu konfiguriert ist, über die Datenschnittstelle (310) mit einer Stromversorgungseinrichtung (10) und einer Endgerätvorrichtung (20) zu kommunizieren;
wobei das Verfahren umfasst:
als Reaktion auf Empfangen, über die Schnittstelleneinheit (322), von Kommunikationsinformationen, welche von der Stromversorgungseinrichtung (10) oder der Endgerätvorrichtung (20) übertragen wurden, Umschalten eines Betriebszustands der Schnittstelleneinheit (322) basierend auf den Kommunikationsinformationen;
wobei der Betriebszustand einen Empfangszustand und einen Ausgabezustand umfasst; wenn sich die Schnittstelleneinheit im Empfangszustand befindet, die Schnittstelleneinheit (322) in der Lage ist, die von der Stromversorgungseinrichtung (10) oder der Endgerätvorrichtung (20) übertragenen Daten zu empfangen; und wenn sich die Schnittstelleneinheit (322) im Ausgabezustand befindet, die Schnittstelleneinheit (322) in der Lage ist, Daten an die Stromversorgungseinrichtung (10) oder die Endgerätvorrichtung (20) zu übertragen;
**dadurch gekennzeichnet, dass**
wenn sich die Schnittstelleneinheit (322) im Empfangszustand befindet, eine Steuereinheit (324) des Ladekabels (30) nicht in der Lage ist, Daten über die Schnittstelleneinheit (322) an die Stromversorgungseinrichtung (10) oder die Endgerätvorrichtung (20) zu übertragen; und
wenn sich die Schnittstelleneinheit (322) im Ausgabezustand befindet, die Steuereinheit (324) weiter in der Lage ist, die von der Stromversorgungseinrichtung (10) oder der Endgerätvorrichtung (20) übertragenen Daten über die Schnittstelleneinheit (322) zu empfangen.

## Revendications

1. Câble de charge (30), comprenant :
une interface de données (310), configurée pour être connectée à un appareil d'alimentation électrique (10) et à un dispositif terminal (20) ; et
un premier module de commande (320) comprenant :
une unité d'interface (322), connectée à l'interface de données (310), et configurée pour communiquer, par l'intermédiaire de l'interface de données (310), avec l'appareil d'alimentation électrique (10) et le dispositif terminal (20) ; et
une unité de commande (324), configurée pour, lors de la réception, par l'intermédiaire de l'unité d'interface (322), d'informations de communication transmises par l'appareil d'alimentation électrique (10) ou le dispositif terminal (20), basculer un état de fonctionnement de l'unité d'interface (322) sur la base des informations de communication ;
dans lequel l'état de fonctionnement comprend un état de réception et un état de sortie ; lorsque l'unité d'interface (322) est dans l'état de réception, l'unité de commande (324) est capable de recevoir, par l'intermédiaire de l'unité d'interface (322), les données transmises par l'appareil d'alimentation électrique (10) ou le dispositif terminal (20) ; et lorsque l'unité d'interface (322) est dans l'état de sortie, l'unité de commande (324) est capable de commander les données à transmettre à l'appareil d'alimentation électrique (10) ou au dispositif terminal (20) par l'intermédiaire de l'unité d'interface (322) ;
**caractérisé en ce que**,
lorsque l'unité d'interface (322) est dans l'état de réception, l'unité de commande (324) est incapable de transmettre, par l'intermédiaire de l'unité d'interface (322), des données à l'appareil d'alimentation électrique (10) ou au dispositif terminal (20) ; et
lorsque l'unité d'interface (322) est dans l'état de sortie, l'unité de commande (324) est en outre capable de recevoir, par l'intermédiaire de l'unité d'interface (322), les données transmises par l'appareil d'alimentation électrique (10) ou le dispositif terminal (20).

2. Câble de charge (30) selon la revendication 1, dans lequel les informations de communication comprennent un premier type d'informations de communication configurées pour indiquer qu'une communication doit être effectuée entre l'appareil d'alimentation électrique (10) et le dispositif terminal (20) ; et
l'unité de commande (324) est configurée pour, lors de la réception, par l'intermédiaire de l'unité d'interface (322), du premier type d'informations de communication transmises par l'appareil d'alimentation électrique (10) ou le dispositif terminal (20), basculer l'unité d'interface (322) dans l'état de réception sur la base du premier type d'informations de communication.

3. Câble de charge (30) selon l'une quelconque des revendications 1-2, dans lequel les informations de communication comprennent en outre un second type d'informations de communication configurées pour indiquer que l'appareil d'alimentation électrique (10) ou le dispositif terminal (20) doit communiquer avec le câble de charge (30) ; et
l'unité de commande (324) est en outre configurée pour, lors de la réception, par l'intermédiaire de l'unité d'interface (322), du second type d'informations de communication transmises par l'appareil d'alimentation électrique (10) ou le dispositif terminal (20), basculer l'unité d'interface (322) dans l'état de sortie sur la base du second type d'informations de communication.

4. Câble de charge (30) selon l'une quelconque des revendications 1-3, dans lequel l'unité d'interface (322) comprend :
une première broche de transmission de données (402), configurée pour être connectée, par l'intermédiaire de l'interface de données (310), à une première broche de réception (110) de l'appareil d'alimentation électrique (10) et à une seconde broche de transmission (210) du dispositif terminal (20) ; et
une seconde broche de transmission de données (404), configurée pour être connectée, par l'intermédiaire de l'interface de données (310), à une seconde broche de réception (220) du dispositif terminal (20) et à une première broche de transmission (120) de l'appareil d'alimentation électrique (10).

5. Câble de charge (30) selon l'une quelconque des revendications 3-4, dans lequel le second type d'informations de communication comprend une première instruction et une deuxième instruction, la première instruction indiquant que le dispositif terminal (20) doit communiquer avec le câble de charge (30), et la deuxième instruction indiquant que l'appareil d'alimentation électrique (10) doit communiquer avec le câble de charge (30) ;
l'unité de commande (324) est en outre configurée pour, lors de la réception, par l'intermédiaire de la première broche de transmission de données (402), de la première instruction transmise par le dispositif terminal (20), basculer la seconde broche de transmission de données (404) dans l'état de sortie sur la base de la première instruction, et commander des données à transmettre au dispositif terminal (20) par l'intermédiaire la seconde broche de transmission de données (404) ; et
l'unité de commande (324) est en outre configurée pour, lors de la réception, par l'intermédiaire de la seconde broche de transmission de données (404), de la deuxième instruction transmise par l'appareil d'alimentation électrique (10), basculer la première broche de transmission de données (402) dans l'état de sortie sur la base de la deuxième instruction, et commander des données à transmettre à l'appareil d'alimentation électrique (10) par l'intermédiaire de la première broche de transmission de données (402).

6. Câble de charge (30) selon la revendication 5, dans lequel l'unité de commande (324) est en outre configurée pour, après que la seconde broche de transmission de données (404) a été basculée dans l'état de sortie sur la base de la première instruction, et lors de la réception, par l'intermédiaire de la première broche de transmission de données (402), d'une troisième instruction transmise par le dispositif terminal (20), basculer la seconde broche de transmission de données (404) dans l'état de réception sur la base de la troisième instruction, la troisième instruction indiquant que le dispositif terminal (20) doit communiquer avec l'appareil d'alimentation électrique (10) ; et
l'unité de commande (324) est en outre configurée pour, après que la première broche de transmission de données (402) a été basculée dans l'état de sortie sur la base de la deuxième instruction, et lors de la réception, par l'intermédiaire de la seconde broche de transmission de données (404), d'une quatrième instruction transmise par l'appareil d'alimentation électrique (10), basculer la première broche de transmission de données (402) dans l'état de réception sur la base de la quatrième instruction, la quatrième instruction indiquant que l'appareil d'alimentation électrique (10) doit communiquer avec le dispositif terminal (20).

7. Câble de charge (30) selon l'une quelconque des revendications 5-6, dans lequel l'état de sortie comprend l'une quelconque parmi une sortie en mode de sortie push-pull et une sortie en mode drain ouvert.

8. Câble de charge (30) selon l'une quelconque des revendications 3-6, dans lequel l'unité de commande (324) est en outre configurée pour transmettre un paramètre de câble stocké à l'appareil d'alimentation électrique (10) ou au dispositif terminal (20), après que l'unité d'interface (322) a été basculée dans l'état de sortie sur la base du second type d'informations de communication, le paramètre de câble comprenant un ou plusieurs parmi un paramètre de courant de transmission de câble, un matériau de câble, un identifiant de câble et une longueur de câble.

9. Câble de charge (30) selon l'une quelconque des revendications 1-8, dans lequel l'interface de données (310) comprend un premier type de broche de données (312) et un second type de broche de données (314) ; et
dans lequel le premier type de broche de données (312) est configuré pour être connecté à la première broche de réception (110) de l'appareil d'alimentation électrique (10) et à la seconde broche de transmission (210) du dispositif terminal (20) ; et
le second type de broche de données (314) est configuré pour être connecté à la première broche de transmission (120) de l'appareil d'alimentation électrique (10) et à la seconde broche de réception (220) du dispositif terminal (20).

10. Système de communication, comprenant un câble de charge (30) selon l'une quelconque des revendications 1-9, un appareil d'alimentation électrique (10) et un dispositif terminal (20), dans lequel l'appareil d'alimentation électrique (10) est connecté au dispositif terminal (20) par l'intermédiaire du câble de charge (30).

11. Procédé de communication, pour un câble de charge (30), le câble de charge (30) comprenant une interface de données (310) et une unité d'interface (322) connectée à l'interface de données (310), l'unité d'interface (322) étant configurée pour communiquer avec un appareil d'alimentation électrique (10) et un dispositif terminal (20) par l'intermédiaire de l'interface de données (310) ;
dans lequel le procédé comprend :
en réponse à la réception, par l'intermédiaire de l'unité d'interface (322), d'informations de communication transmises par l'appareil d'alimentation électrique (10) ou le dispositif terminal (20), la bascule d'un état de fonctionnement de l'unité d'interface (322) sur la base des informations de communication ;
dans lequel l'état de fonctionnement comprend un état de réception et un état de sortie ; lorsque l'unité d'interface est dans l'état de réception, l'unité d'interface (322) est capable de recevoir des données transmises par l'appareil d'alimentation électrique (10) ou le dispositif terminal (20) ; et lorsque l'unité d'interface (322) est dans l'état de sortie, l'unité d'interface (322) est capable de transmettre des données à l'appareil d'alimentation électrique (10) ou au dispositif terminal (20) ;
**caractérisé en ce que**,
lorsque l'unité d'interface (322) est dans l'état de réception, une unité de commande (324) du câble de charge (30) est incapable de transmettre, par l'intermédiaire de l'unité d'interface (322), des données à l'appareil d'alimentation électrique (10) ou au dispositif terminal (20) ; et
lorsque l'unité d'interface (322) est dans l'état de sortie, l'unité de commande (324) est en outre capable de recevoir, par l'intermédiaire de l'unité d'interface (322), les données transmises par l'appareil d'alimentation électrique (10) ou le dispositif terminal (20).
